# EUROPEAN PATENT APPLICATION

(11) **EP 1 187 012 A2**
(43) Date of publication of application: **13.03.2002**
(21) Application number: 01304404.5
(22) Date of filing: 18.05.2001
(51) Int. Cl.: G06F 9/445

(54) **Software program providing system**

(30) Priority: 19.05.2000 JP 2000148203
(71) Applicant: SONY CORPORATION, Tokyo (JP)
(72) Inventor: Ueda, Satoru, c/o Sony Corporation, Tokyo (JP)
(74) Representative: Ayers, Martyn Lewis Stanley

(57) **Abstract**

The present invention aims at allowing easy administration of software program, permitting use of latest updated software program without overlooking the same. A supplemental program is stored in a supplemental software program storing means; a list of the supplemental program stored in the supplemental software program storing means is extracted; a list of an original program stored in the software program storing means is extracted; the list of the program extracted by the software program list extracting means and the list of the supplemental program extracted by the supplemental software program list extracting means are compared through a supplemental software program selecting means, and a supplemental program to acquire is chosen; the chosen supplemental program is extracted from the supplemental software program storing means; and, through a supplemental software program writing means, the extracted supplemental program is stored in the software program storing means.

## Description

The present invention is related to a software program providing system, a software program providing method and a computer-readable storage medium storing a program that makes the computer perform the functions thereof and, in particular, the present invention relates to a software program providing system providing a newly added software program, the software program providing method and a computer-readable storage medium storing a software program for making the computer perform the functions thereof.

When new contents are added to an original software program that is stored and supplied to a storage medium such as a CD-ROM (Compact Disc Read Only Memory), the supplemental software program, which is a software program falling in the category of a supplemental/added/amended content thereof, is stored in another CD-ROM and, in general, it is provided separately from the original software program.

However, according to the related art, because the original software program and the supplemental software program are provided separately in a storage medium such as the CD-ROM, to which additional data cannot be written, there is a problem that it is not possible to store one set of supplemental software program within a single storage medium, thus making it difficult to administrate the software program.

In addition, according to the related art, even if new supplemental software program is provided, a user who is not acknowledged of such information cannot obtain the supplemental software program, thus causing a problem that he cannot use the latest updated software program.

Moreover, according to the related art, when an original stored software program is lost, for example, because of failure in the user's computer, there is the inconvenience that a recovering operation is difficult.

Still, a software program provider that provides the supplemental software program cannot easily grasp each user's environment, thus causing a problem that the provider is not able to provide appropriate information for each user.

By taking the above-mentioned concerns into consideration, it is an object of the present invention to provide a software program providing system that allows an easy administration of software program and that can be used without overlooking the latest updated software program.

It is another object of the present invention to provide a software program providing system, in which a recovering operation can be done easily, even if an original software program stored in a user's computer is lost. In addition, another object of the present invention is to provide a software program providing system, in which a software program provider can easily grasp each user's environment, so that the provider can provide appropriate information for each user.

Another object of the present invention aims at providing a software program providing method in which administration of software program can be done easily, thus the latest updated software program can be used without been overlooked.

It is another object of the present invention to provide a software program providing method in which data recovering operation is done easily even if an original software program stored in a user's computer is lost.

In addition, it is another object of the present invention to provide a software program providing method in which a software program provider can easily grasp each user's environment, thus appropriate information can be provided for each user.

According to another object of the present invention, a storage medium is provided, in which software program administration can be done easily, allowing a computer to read a program that makes the computer execute the latest updated software program without overlooking the same.

Furthermore, it is another object of the present invention to provide a storage medium, which is readable by a computer, storing a program that makes the computer perform a function of allowing an easy recovering operation, even if an original software program stored in the user's computer is lost.

Moreover, it is another object of the present invention to provide a storage medium that can be read by a computer, store a program in which a software program provider can grasp the user environment of each user easily, and that makes the computer execute a function in which the software program provider can provide appropriate information as against each user.

In order to solve the above-mentioned problems, according to another embodiment of the present invention, a software program providing system is provided, the software providing system including a software program providing apparatus having a supplemental software program storing means storing a supplemental software program which is software program added to an original software, a software program storing means for storing a software program, and a user terminal device, having: a software program list extracting means for extracting a list of the original software program stored in the software program storing means; a supplemental software program list extracting means for extracting a list of the supplemental software program stored in the supplemental software program storing means; a supplemental software program selecting means for selecting the supplemental software program to be extracted, by comparing the list of the original software program extracted by the software program list extracting means with the list of the supplemental software program extracted by the supplemental software program list extracting means; a supplemental software program extracting means for extracting the supplemental software program selected by the supplemental software program selecting means from the supplemental software program storing means; and a supplemental software program writing means for writing the supplemental software program, extracted by the supplemental software program extracting means, into the software program storing means.

In other words, the supplemental software program storing means stores the supplemental software program which is an newly added software program to an original software, the software program storing means stores an original software program, the software program list extracting means extracts a list of the stored original software program in the software program storing means, the supplemental software program list extracting means extracts a list of a supplemental software program stored in a supplemental software program storing means, the supplemental software program selecting means compares the list of the software program extracted by the software program list extracting means with the list of the supplemental software program extracted by the supplemental software program list extracting means and selects a supplemental software program to be extracted, the supplemental software program extracting means extracts a supplemental software program selected by the supplemental software program selecting means from the supplemental software program storing means, the supplemental software program writing means writes the supplemental software program extracted by the supplemental software program extracting means in the software program storing means.

Alternatively, according to another embodiment of the present invention, the supplemental software program writing means may store a supplemental operation record of the installed supplemental software program into the software program storing means, and, if the original software program is lost, according to contents of the stored supplemental operation record stored into the software program storing means, installs the supplemental software program.

Such software program providing apparatus has, in addition, a user information storing means for storing user environment information, associated to the user identification information for identifying the user, that is transmitted from each user; and such supplemental software program list extracting means transmits the user identification information to the software program providing apparatus, the list of the supplemental software program compatible with the user environment information and associated to the transmitted user identification information, is extracted from the supplemental software program storing means.

According to a software program providing method in accordance with another embodiment of the present invention, supplemental software program which is a software program newly added to an original software is stored, a list of the stored original software program is extracted, a list of the stored supplemental software program is extracted, then the list of the extracted original software program and the list of the extracted supplemental software program are compared, then the supplemental software program to be extracted is selected, the selected supplemental software program is extracted, and the extracted supplemental software program is stored (recorded).

By such procedure, administration of a software program becomes easy, thus permitting utilization of the latest updated software program without overlooking the same.

In addition, supplemental operation record of the installed supplemental software program is stored, and, in case the original software program is lost, the supplemental software program is installed in accordance with the contents of the stored supplemental operation record.

Moreover, a software program providing method according to another embodiment the present invention: stores the user environment information associated to the user identification information for identifying the use, that is transmitted from each user; transmits the user identification information; and extracts a list of the supplemental software program compatible with the user environment information associated to the transmitted user identification information.

Furthermore, a computer-readable storage medium in accordance with another embodiment of the present invention is provided, storing a program that makes the computer perform the steps of: storing a supplemental software program which is a software program that is newly added to an original software program; extracting a list of the stored original software program; extracting a list of the stored supplemental software program; comparing the list of the extracted original software program and the list of the extracted supplemental software program; selecting the supplemental software program to be extracted; extracting the selected supplemental software program; and writing the extracted supplemental software program.

Accordingly, a provided supplemental software program is stored in a software program providing apparatus, a list of the supplemental software program stored in the software program providing apparatus is extracted, a list of a software program stored in a software program storing means is extracted, the list of the supplemental software program extracted from the software program providing apparatus and the list of the software program extracted from the software program storing means are compared, then a supplemental software program to be acquired is selected, the selected supplemental software program is extracted from the software program providing apparatus, and the extracted supplemental software program is stored in the software program storing means, whereby a user can make use of a latest software program provided without overlooking such latest software program.

In addition, because the provided supplemental software program is stored in a same software program storing means of the original software program, a whole set of provided software program can be easily administrated.

Moreover, if an original software program stored in the computer is lost, however with a supplemental operation record stored in the software program storing means, the original and supplemental software program can be installed according to the supplemental operation record stored in the software program storing means, thus recovering operation is possible to be done easily even if the original software program stored in the user's computer is lost.

In addition, because the user environment information associated to user identification information, which is transmitted from each user, is stored in a user information storing means, the software program provider can grasp each user's environment easily, thus an appropriate provision of information can be realized as against each user.

The foregoing and other objects, features and advantages of the present invention will be apparent to those skilled in the art from the following description of the preferred exemplary embodiments of the present invention taken in conjunction with the accompanying drawings, in which:
FIG. 1 is a block-diagram showing a construction of a software program providing system according to a preferred embodiment of the present invention;
FIG. 2 is a diagram showing a directory construction of a software program storing means according to a preferred embodiment of the present invention;
FIG. 3A is a table showing a configuration of associated user identification information and user environment information according to a preferred embodiment of the present invention;
FIG. 3B is a table showing a configuration of associated user environment information and supplemental software program according to a preferred embodiment of the present invention;
FIG. 4 is a flowchart showing an operation of a software program providing system for an occasion of service agreement according to a preferred embodiment of the present invention;
FIG. 5 is a flowchart showing a supplemental software program providing operation of the software program providing system according to a preferred embodiment of the present invention;
FIG. 6 is a flowchart showing a supplemental software program providing operation of the software program providing system according to a preferred embodiment of the present invention; and
FIG. 7 is a flowchart showing a supplemental software program providing operation of the software program providing system according to a preferred embodiment of the present invention.

A detailed description of the preferred embodiments of the present invention is done with reference to the accompanying drawings, as follows.

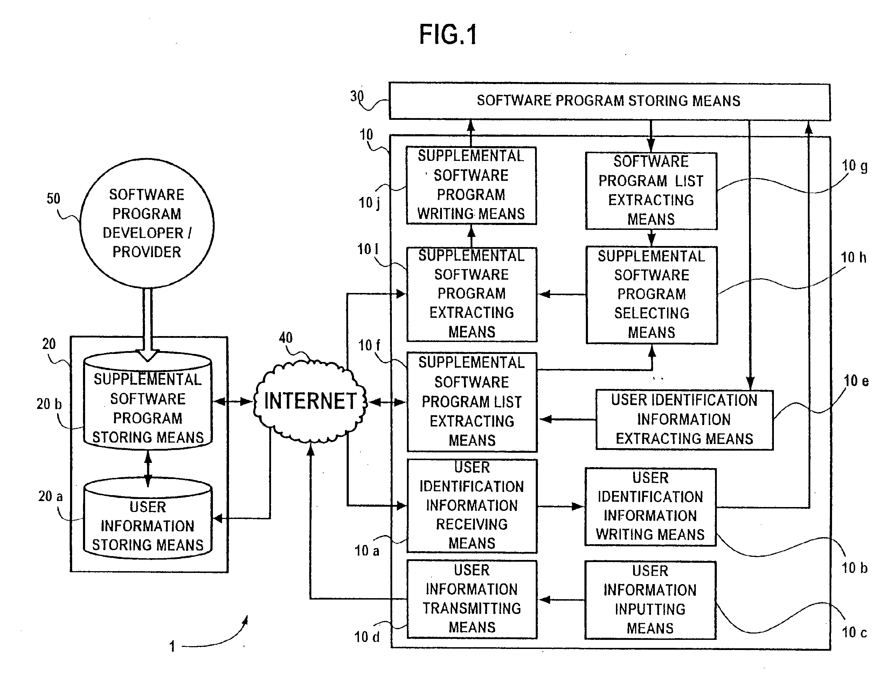

Fig. 1 is a block diagram showing a construction of a software program providing system 1 according to a preferred embodiment of the present invention.

The software program providing system 1 is constituted by a software program developer/provider 50 for developing and providing a software program, a software program providing apparatus 20 for providing software program. Internet 40 for conveying software program information or the like, a user terminal device 10 for receiving a software program provided by the software program providing apparatus 20 and a software program storing means 30 for storing software program or the like. Here, the software program developer/provider 50 is an organization that is separated from the service provider providing a software program by means of the software program providing apparatus 20, and the user terminal device 10 receives provision of software program provided by the software program developer/provider 50 through the software program providing apparatus 20.

The software program providing apparatus 20 is constituted by a user information storing means 20a storing user environment information associated to user identification information for identifying the user, that is transmitted from each user; and a supplemental software program storing means 20b storing a supplemental software program, which is a software program to be added to an original software program.

The user terminal device 10 is constituted by a user identification information receiving means 10a for receiving transmitted user identification information from the software program providing apparatus 20, a user identification information writing means 10b for writing the user identification information received by means of the user identification information receiving means 10a, into the software program storing means 30, a user information inputting means 10c for inputting user environment information or the like, a user information transmitting means 10d for transmitting user environment information or the like inputted by the user information inputting means 10c, a user identification information extracting means 10e for extracting user identification information stored in the software program storing means 30, a supplemental software program list extracting means 10f for extracting a list of supplemental software program stored in the supplemental software program storing means 20b, a software program list extracting means 10g for extracting a list of software program stored in the software program storing means 30, comparing the list of software program extracted by means of the software program list extracting means 10g and the list of supplemental software program extracted by means of the supplemental software program list extracting means 10f, a supplemental software program selecting means 10h for selecting a supplemental software program to be extracted, a supplemental software program extracting means 10i for extracting the supplemental software program selected by means of the supplemental software program selecting means 10h, from the supplemental software program storing means 20b, and a supplemental software program writing means 10j for writing a supplemental software program extracted by means of the supplemental software program extracting means 10i into the software program storing means 30.

The software program storing means 30 is a storage medium using a recordable CD-ROM (Compact Disc [ a trademark ] - Read Only Memory) storing software program, a DVD-ROM (Digital Versatile Disc- Read Only Memory), a magneto-optical disc, a semiconductor memory or the like, or an apparatus including an apparatus such as a hard disc or the like.

As for the software program providing apparatus 20, the user information storing means 20a and the supplemental software program storing means 20b are electrically connected so that mutual exchange of information is enabled and, in addition, they are electrically connected to be able to communicate with the Internet 40.

In addition, in the user terminal device 10, the user identification information receiving means 10a, the user information transmitting means 10d, the supplemental software program list extracting means 10f and the supplemental software program extracting means 10i are electrically connected to communicate with the Internet 40. The user information inputting means 10c is constituted so as to providing information to the user information transmitting means 10d, the user identification information receiving means 10a to the user identification information writing means 10b, the user identification information extracting means 10e to the supplemental software program extracting means 10f, the supplemental software program extracting means 10f to the supplemental software program selecting means 10h, the software program list extracting means 10g to the supplemental software program selecting means 10h, the supplemental software program selecting means 10h to the supplemental software program extracting means 10i and supplemental software program extracting means 10i to the supplemental software program writing means 10j. Moreover, the user identification information writing means 10b, the user identification information extracting means 10e, the supplemental software program writing means 10j and the software program list extracting means 10g are constituted so as to allow reading/writing of information from/to the software program storing means 30.

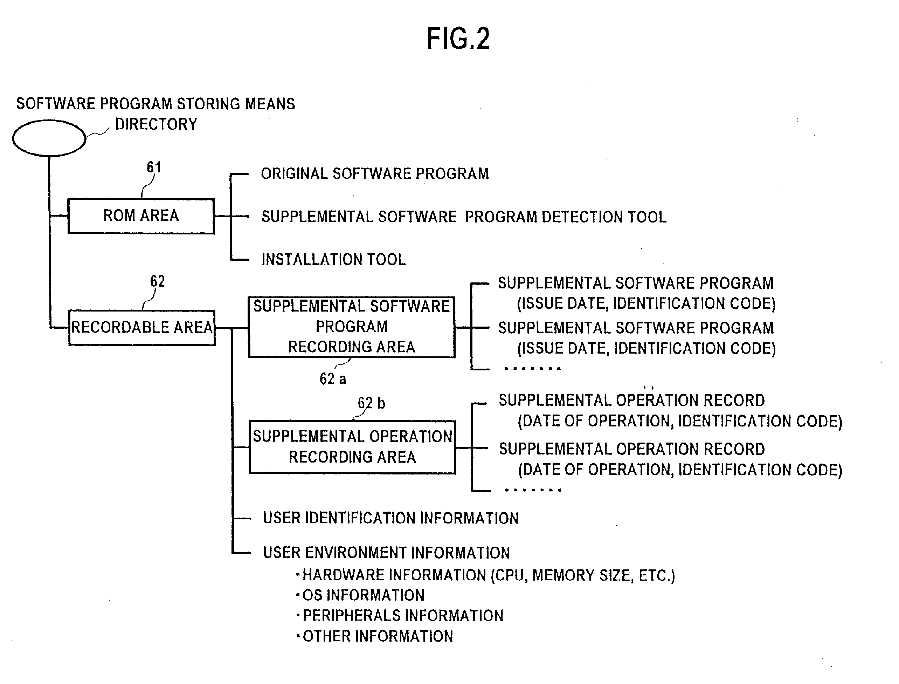

FIG. 2 is a diagram showing a constitution of a directory for the software program storing means 30. Within the software program storing means 30, a non-recordable ROM area 61 and a recordable area 62 are established. In the ROM area 61, a original software program, a supplemental software program detection tool and an installation tool are stored. A supplemental software program recording area 62a storing supplemental software program and a supplemental operation recording area 62b storing a supplemental operation record, are subordinated to the recordable area 62, and the user identification information, used in order to identify a user, and the user environment information, showing user's environment such as hardware information, OS (Operating System) information, peripheral device information or the like, are stored therein. In addition, in the supplemental software program recording area 62a, the supplemental software program includes a release date and an identification code, and in the supplemental operation recording area 62b, the supplemental operation record, which is the operation record for an installation of the supplemental software program, includes a date of operation and an operation date identification code. Moreover, the supplemental software program detection tool, which is information regarding an access key required in order to access the supplemental software program storing means 20b or the like, is extracted and activated when acquiring the supplemental software program list described below.

Next, a description of the operation of the software program providing system 1 is made using FIG. 1 and FIG. 2.

As a premise for using the software program providing system 1, a user using the system ties up an agreement for using the present system, with the service provider providing the software program related to the system. A procedure for the agreement is done as against the software program providing apparatus 20 through the Internet 40 by means of the user terminal device 10. At first, on the occasion of the agreement, the user inputs user information such as user's given names, address, bank account number or the like, by means of the user information inputting means 10c. The user information inputted by the user information inputting means 10c is sent to a user information transmitting means 10d, and the user information transmitting means 10d transmits the user information to the software program providing apparatus 20 over the Internet 40.

The user information transmitted to the software program providing apparatus 20 is stored in the user information storing means 20a, and the software program providing apparatus 20 transmits the user identification information specifying the contractor to a user terminal device 10 over the Internet 40. The user identification information transmitted to the user terminal device 10 is received by means of the user identification information receiving means 10a, and the received user identification information is stored in the recordable area 62 of the software program storing means 30 by means of the user identification information writing means 10b.

Next, the user inputs hardware information such as information regarding CPU (Central Processing Unit), memory size or the like and user environment information such as information regarding OS, peripheral devices or the like by using the user information inputting means 10c. The inputted user environment information is transmitted by the user information transmitting means 10d, and the transmitted user environment information that is associated to the user identification information of the user, is stored into the user information storing means 20a of the software program providing apparatus 20, via the Internet 40.

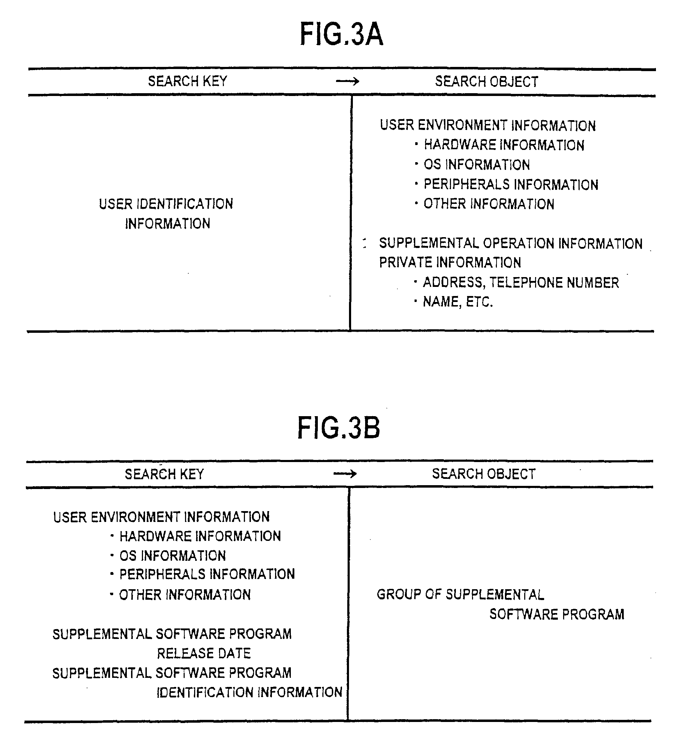

FIG. 3A shows a configuration of such user identification information associated in such way and the user environment information. According to the example of FIG. 3A, the user environment information such as hardware information or the like, a supplemental operation record showing the user's historic data regarding the provision of supplemental software program, as well as private information such as user's address or the like, are set associated to the user identification information, and, by utilizing the user identification information as a search key, information on the user identificated by such user identification information such as user environment information, supplemental operation records and private information are searched.

In addition, storage of the user environment information to the user information storing means 20a is done only when authorized by the user, in order to protect user's privacy. Moreover, although an input of the user environment information is done by the user upon using the user information inputting means 10c, it is also possible to have a construction in which the user terminal device 10 detects the user environment information automatically, then transmitting the detected user environment information by means of the user information transmitting means 10d. Furthermore, although according to an embodiment of the present invention the inputted or detected user environment information is stored in the user information storing means 20a, it is also allowable to store the user environment information in the software program storing means 30. As a problem of privacy does not occur in the case of storing the user environment information in the software program storing means 30, it is not necessary to have an authorization from the user in such situation.

Next, a supplemental software program providing operation regarding the software program providing system 1 is described below. When the software program developer/provider 50 provides supplemental software program, at first, the software program developer/provider 50 sends the supplemental software program which is going to be provided, to the software program providing apparatus 20, the software program providing apparatus 20 stores the supplemental software program associated to the user environment information corresponding to the supplemental software program that was sent, into the supplemental software program storing means 20b.

FIG. 3B shows a configuration of such user environment information associated in such way and the user environment information.

As shown in FIG. 3B, the supplemental software program stored in the supplemental software program storing means 20b is associated to the user environment information corresponding to the supplemental software program and the release date and identification code of the supplemental software program, so that the associated supplemental software program is possible to be identificated by means of setting the user environment information or the like as a search key.

The user who is going to receive provision of the supplemental software program first mounts or connects the software program storing means 30 into which the software program is stored to the user terminal device 10. In addition, here "mounting" stands for mounting of a storage medium to the user terminal device 10 when the software program storing means 30 is a storage medium such as a magneto-optical disc or the like, and "connection" stands for connection between the software program storing means 30 and the user terminal device 10, when the software program storing means 30 is a recording apparatus such as a hard disc, or a connection through a communication line such as the Internet.

When the software program storing means 30 is mounted or connected, the supplemental software program detection tool stored in the software program storing means 30 is activated, and then an access key for the supplemental software program storing means 20b is acquired.

Next, the user identification information extracting means 10e extracts the user identification information stored in the recordable area 62 of the software program storing means 30, the extracted user identification information is sent to the supplemental software program list extracting means 10f, then the supplemental software program extracting means 10f receiving this user identification information transmits this user identification information to the user information storing means 20a of the software program providing apparatus 20 over the Internet 40. The user information storing means 20a receiving the user identification information provides the user environment information of the user, that is stored in association with the transmitted user identification information, to the supplemental software program storing means 20b.

The supplemental software program storing means 20b to which user environment information is provided specifies the supplemental software program corresponding to the user environment information, then a list of the specified supplemental software program is transmitted to the supplemental software program list extracting means 10f of the user terminal device 10 through the Internet 40. The list of supplemental software program transmitted to the supplemental software program list extracting means 10f is sent to the supplemental software program selecting means 10h and then used for selection of the supplemental software program to be acquired.

On the other hand, the software program list extracting means 10g of the user terminal device 10 extracts a list of supplemental software program stored in the supplemental software program recording area 62a of the software program storing means 30, and the list of the extracted supplemental software program is sent to the supplemental software program selecting means 10h.

The supplemental software program selecting means 10h, upon receiving the list of supplemental software program sent from the supplemental software program list extracting means 10f and the list of supplemental software program sent from the software program list extracting means 10g, compares both lists, and the supplemental software program to be acquired is selected. The selection of the supplemental software program is done by means of identification of the software program as supplemental software program for acquiring the supplemental software program that is stored in the supplemental software program storing means 20b but not stored in the software program storing means 30. In addition, at this event, a criterion for selection of a supplemental software program, such as whether the supplemental software program is adequate for the user, whether the supplemental software program is a software program the user is requesting, whether the supplemental software program is a software program that the user can legally acquire as a result of payment of requested cost price, etc., and the like can be added.

The information thus selected regarding the supplemental software program selected by means of the supplemental software program selecting means 10h is sent to the supplemental software program extracting means 10i, and the supplemental software program extracting means 10i extracts the identified supplemental software program from the supplemental software program storing means 20b of the software program providing apparatus 20, through the Internet 40. In addition, it is preferable that the information on the supplemental software program contents description that describes the contents of the supplemental software program is stored into the supplemental software program storing means 20b, and further it is preferable to extract the information on the supplemental software program contents description of the supplemental software program at the event of extracting the supplemental software program, by using the supplemental software program extracting means 10i.

The extracted supplemental software program is stored in the supplemental software program recording area 62a of the software program storing means 30, by means of the supplemental software program writing means 10j. The supplemental software program stored in the supplemental software program recording area 62a is installed into a user's computer or the like, by means of the installation tool stored in the ROM area 61 of the software program storing means 30. At this event, the supplemental software program writing means 10j stores an operation record of the installed supplemental software program in the supplemental operation recording area 62b of the software program storing means 30, as a supplemental operation record. In addition, when authorization from the user is provided, it is preferable that the supplemental operation record is transmitted to the software program providing apparatus 20 and stored into the user information storing means 20a via the Internet 40.

A description is made next of a recovering operation for a software program when an original software program stored in a computer is lost due to failure of the user's computer. When basic functions of the computer are recovered, and the software program storing means 30 is loaded into or connected to the user terminal device 10, the installation tool stored in the ROM area 61 of the software program storing means 30 is activated and the absence of software program within the computer is determined.

When it is determined that there is no software program in the computer, the user environment information stored in the recordable area 62 and an actual information on the computer are compared, and it is determined whether the software program stored in the software program storing means 30 can be installed in the computer.

When it is determined that the software program stored in the software program storing means 30 can be installed, at first the original software program stored in the ROM area 61 is installed by means of the installation tool. After that, the supplemental operation record stored in the supplemental operation recording area 62b is extracted and, according to information shown in the extracted supplemental operation record, the installed supplemental software program is extracted from the supplemental software program recording area 62a and installed in sequential order of date of installation starting from earliest date to latest date. Through this procedure, a software program that is equivalent to the original software program that has been lost can be easily installed.

Next, an operation of the software program providing system 1 is explained by using a flowchart.

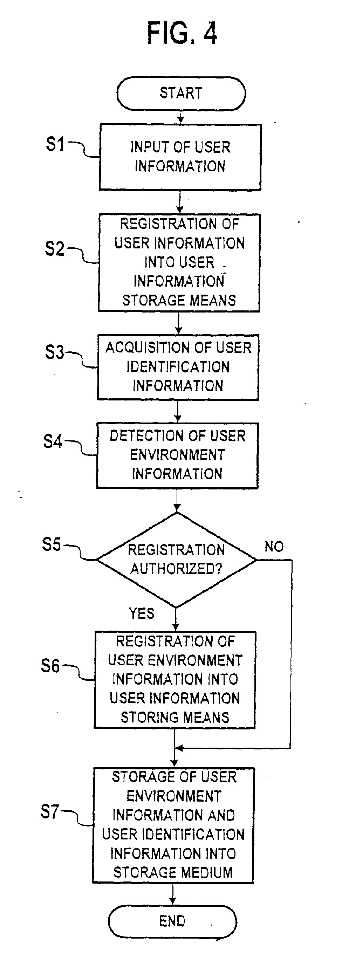

FIG. 4 is the flowchart showing an operation of the software program providing system 1 on occasion of tying up a service agreement.

First, user information related to the user is inputted by means of the user information inputting means 10c, at step S1. Then, the inputted user information is transmitted to the software program providing apparatus 20 via the Internet 40, and stored into the user information storing means 20a, at step S2. The user identification information is then transmitted from the software program providing apparatus 20 to the user terminal device 10 via the Internet 40, the transmitted user identification information is received by means of the user identification information receiving means 10a, and stored in the software program storing means 30 by means of the user identification information writing means 10b, at step S3. Then, the user environment information is detected at step S4 and it is determined whether the user has authorized registration of the user environment information so detected within the user information storing means 20a of the software program providing apparatus 20, at step S5.

If it is determined that the user has authorized registration, then the detected user environment information is transmitted to the software program providing apparatus 20 via the Internet 40, and stored into the user information storing means 20a, at step S6.

On the other hand, if it is determined that the user has not authorized registration, the user environment information and the user identification information are stored in the storage medium including the software program storing means 30, at step S7.

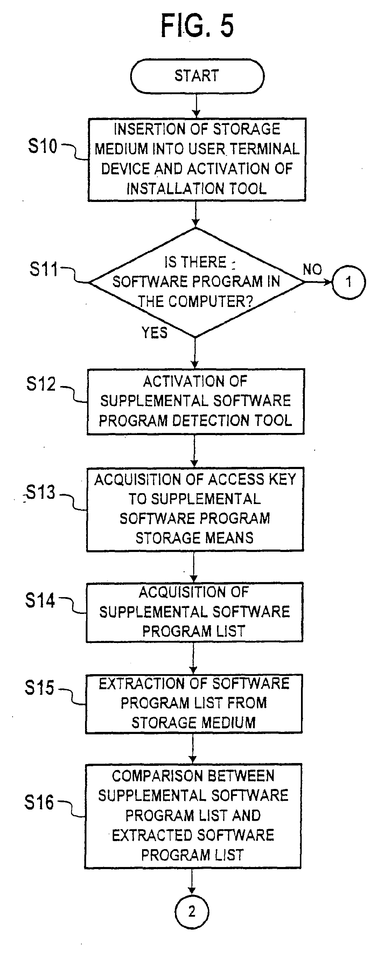

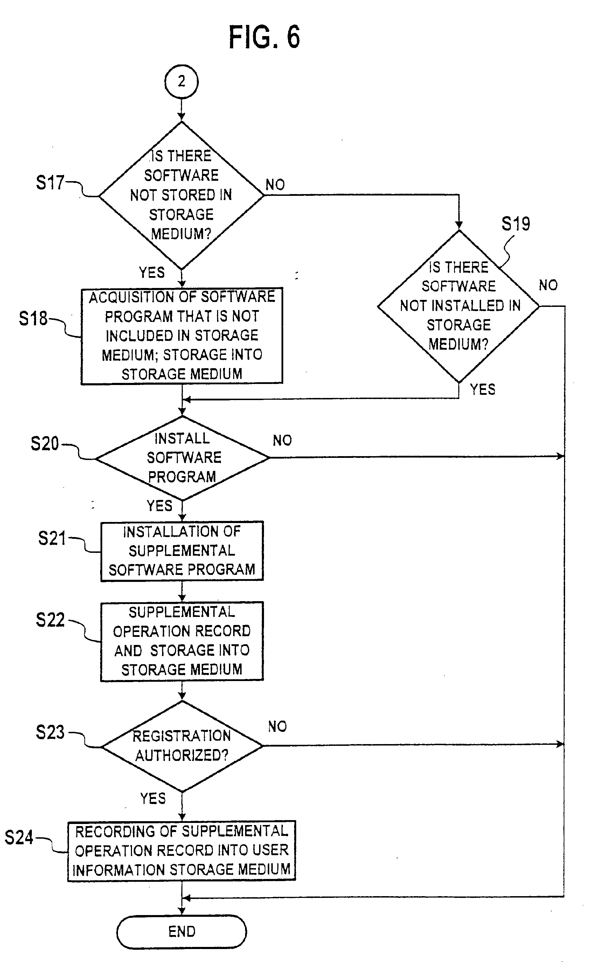

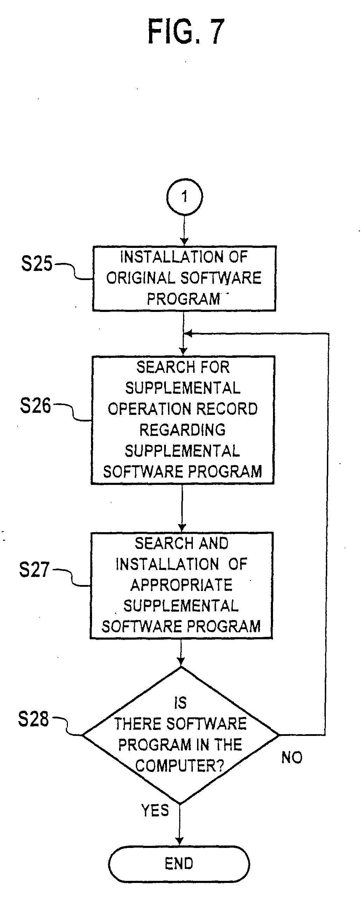

FIG. 5 to FIG. 7 are flowcharts showing an operation of providing supplemental software program regarding the software program providing system 1.

The storage medium comprising the software program storing means 30 is inserted in the user terminal device 10, and the installation tool stored in the ROM area 61 is activated at step S10. Then, it is determined whether there is software program in the user's computer at step S11.

If it is determined that there is software program, then a supplemental software program detection tool is activated at step S12, so that an access key to the supplemental software program storing means 20b is acquired at step S13. Through the supplemental software program extracting means 10f, a list of the supplemental software program stored in the supplemental software program storing means 20b is extracted at step S14 and, through the software program list extracting means 10g, a list of the original software program is extracted from the storage medium comprising the software program storing means 30 at step S15. After that, the extracted list of the supplemental software program and the extracted list of the original software program are compared at step S16, so that it is determined whether there is software program that is not stored in the storage medium including the software program storing means 30, among the supplemental software program stored in the supplemental software program storing means 20b, at step S17. If it is determined that there is such a software program, then by means of the supplemental software program extracting means 10i, the software program that it is not stored in the software program storing means 30 among the supplemental software program stored in the supplemental software program storing means 20b is extracted from the supplemental software program storing means 20b, and the extracted supplemental software program is stored in the software program storing means 30, that is the storage medium, by means of the supplemental software program writing means 10j, at step S18. Conversely, if it is determined that there is no such a software program, then it is determined whether there is software program that is installed in the storage medium including the software program storing means 30 at step S19 and, if it is determined that there is no such a software program, then the processing is finished. It is determined that there is such a software program, then processing proceeds as follows. Among the software program stored in the storage medium, which includes the software program storing means 30, it is decided whether to install the software program that is not installed, at step S20. If it is determined not to install, then the processing is finished. However, if it is determined to proceed with installation, then the software program to be added is installed at step S21, a supplemental operation record for the software program is made, and stored in the storage medium including the software program storing means 30, at step S22. Furthermore, it is determined whether the user has authorized registration of the supplemental operation record to the user information storing means 20a, at step S23. If it is not authorized, then the processing is finished. If it is authorized, then the supplemental operation record is transmitted to the software program providing apparatus 20 via the Internet 40, and stored in the user information storing means 20a, at step S24.

On the other hand, if it is determined that there is no software program, then the original software program stored in the ROM area 61 is installed at step S25, and search is done for a supplemental operation record stored in the supplemental operation recording area 62b, at step S26. The supplemental software program shown in the supplemental operation record is detected from the supplemental software program recording area 62a of the software program storing means 30 and then installed, at step S27. Finally, it is determined whether search of all supplemental operation records is finished. If it is determined that the search is finished, then the process is finished otherwise, if it is determined that the search is not finished, then the process goes back to step S26, in which a new search is done for a supplemental operation record stored in the supplemental operation recording area 62b and proceeds through steps S27 to reach step S28 again, until search is finished.

As described above, according to the preferred embodiment of the present invention, the supplemental software program provided from the software program developer/provider 50 is stored in the supplemental software program storing means 20b of the software program providing apparatus 20, a list of supplemental software program stored in supplemental software program storing means 20b is extracted by means of the supplemental software program list extracting means 10f, a list of software program stored in the software program storing means 30 is extracted by means of the software program list extracting means 10g, the list of supplemental software program extracted by the supplemental software program list extracting means 10f and the list of software program extracted by the software program list extracting means 10g are compared by means of the supplemental software program selecting means 10h, the supplemental software program to be acquired is selected, the selected supplemental software program is extracted from the supplemental software program storing means 20b via the Internet 40, and because the extracted supplemental software program is stored in the software program storing means 30 by means of the supplemental software program writing means 10j, the user can use the latest software program, without overlooking the same.

In addition, as the provided supplemental software program can be stored in the same software program storing means 30 as the original software program, it is possible to control a whole set of provided software program.

Moreover, an installation history of supplemental software program to the computer is stored in the software program storing means 30 as supplemental operation record, and if an original software program stored in the computer is lost, as the supplemental software program is installed according to the supplemental operation record stored in the software program storing means 30, even if the original software program stored in the user's computer is lost, the recovering operation can be performed easily.

Furthermore, because the user environment information transmitted from each user by means of the user information transmitting means 10d is stored in the user information storing means 20a in association with the user identification information for identifying the user, the software program supplier can easily grasp the user environment for each user, thus allowing provision of appropriate information as against each user.

In addition, the process functions described above can be realized by using a computer. In such case, the processing steps for the function that the user terminal device 10 and the software program providing apparatus 20 should have are described in a program code recorded in a computer-readable storage medium. Accordingly, by executing such program code using the computer, results that the computer can realize the whole process. As an example of computer-readable storage medium, there is a magnetic recording apparatus, a semiconductor memory or the like. As for circulation in the market, it is preferable to provide circulation by storing the program in a portable storage medium such as a CD-ROM, a Floppy (a trademark) Disc or the like, as well as storing the program in a storing device of the computer connected to a communication network, and then transferring the program to another computer through the network. When executed by a computer, the software program is stored in a hard disc drive in connection to the computer or the like, and then executed after been loaded into a main memory of the computer.

In addition, although according to the preferred embodiment of the present invention, description of the software program developer/provider 50 and the service provider providing software program by means of the software program providing apparatus 20 was done by supposing they are independent, it is also possible to set a software program developer/provider 50 that provides software program using the software program providing apparatus 20.

Finally, the configurations and structures of respective units and portions described specifically with respect to the preferred embodiments of the present invention are only examples of realization of the present invention, so the embodiments thereof should not be construed as to limiting the technical scope of the present invention.

## Claims

1. A software program providing system providing a software program, comprising:
a software program providing apparatus including a supplemental software program storing means for storing a supplemental software program, which is to be added to a software program stored in a software program storing means;
a user terminal device having:
a software program list extracting means for extracting a list of said software program stored in said software program storing means;
a supplemental software program list extracting means for extracting a list of said supplemental software program stored into said supplemental software program storing means;
a supplemental software program selecting means for selecting said supplemental software program, wherein said supplemental software program is extracted by comparing said list of said software program extracted by said software program list extracting means with said list of said supplemental software program extracted by said supplemental software program list extracting means;
a supplemental software program extracting means for extracting said supplemental software program from said supplemental software program storing means, wherein said supplemental software program is selected by said supplemental software program selecting means; and
a supplemental software program writing means for writing said supplemental software program into said software program storing means, wherein said supplemental software program is extracted by said supplemental software program extracting means.

2. The software program providing system according to Claim 1, wherein said supplemental software program writing means writes a supplemental operation record of said supplemental software program into said software program storing means; and
if said original software program is lost, said software program providing system installs said supplemental software program, according to a content of said stored supplemental operation record stored into said software program storing means.

3. The software program providing system according to Claim 1 or 2, wherein said software program providing apparatus further comprises a user information storing means for storing user environment information transmitted from each user, wherein said user environment information is stored in association to user identification information identifying said user;
said supplemental software program list extracting means transmits said user identification information to said software program providing apparatus; and
a list of said supplemental software program is extracted from said supplemental software program storing means, wherein said list of said supplemental software program is compatible with said user environment information related to said transmitted user identification information.

4. The software program providing system according to Claim 3, wherein said software program storing means stores said user identification information;
said user terminal device has a user identification information extracting means for extracting said user identification information stored in said software program storing means;
said supplemental software program list extracting means transmits said user identification information to said software program providing apparatus, wherein said user identification information is extracted by said user identification information extracting means; and said list of said supplemental software program is extracted from said supplemental software program storing means, wherein said list of said supplemental software program is compatible with said user environment information, and said user environment information is related to said transmitted user identification information.

5. The software program providing system according to any preceding Claim, wherein
said supplemental software program storing means stores supplemental software program contents description information, wherein said supplemental software program contents description information describes contents of said supplemental software program; and
said supplemental software program list extracting means extracts said supplemental software program contents description information related to said supplemental software program selected by means of said supplemental software program selecting means.

6. The software program supplying system according to Claim 1, wherein said software program storing means is a portable storage medium.

7. A method for providing software program, comprising the steps of:
storing a supplemental software program, which is to be added to a software program stored in a software program storing means;
storing said software program;
extracting a list of said software program;
extracting a list of said supplemental software program;
comparing said list of said software program with said list of said supplemental software program and then selecting said supplemental software program;
extracting said supplemental software program; and writing said supplemental software program.

8. The method according to Claim 7, wherein when said supplemental software program is installed, said software program providing method further comprises the following step of:
storing a supplemental operation record of said supplemental software program; wherein
if said software program is lost, said supplemental software program is installed in accordance with contents of said stored supplemental operation record.

9. The method according to Claim 7 or 8, further comprising the following steps of:
storing user environment information transmitted from each: of a user, wherein said user environment information is related to said user identification information for identifying said user;
transmitting said user identification information; and
extracting a list of said supplemental software program, wherein said list of said supplemental software program is compatible with said user environment information, and said user environment information is related to said transmitted user identification information.

10. A computer-readable storage medium containing computer readable instructions, said computer readable instructions comprising:
instruction means for causing a computer to store supplemental software program, which is to be added to a software program stored in a software program storing means;
instruction means for causing a computer to extract a list of a stored software program;
instruction means for causing a computer to extract a list of said stored supplemental software program;
instruction means for causing a computer to compare said extracted list of said stored software program with said list of said stored supplemental software program and then select said supplemental software program to be extracted;
instruction means for causing a computer to extract said supplemental software program; and
instruction means for causing a computer to write said extracted supplemental software program.

11. A computer program, comprising:
means for causing a computer to store supplemental software program, which is to be added to a software program stored in a software program storing means;
means for causing said computer to extract a list of a software program;
means for causing said computer to extract a list of said supplemental software program;
means for causing said computer to compare said extracted list of software program with said list of said supplemental software program, then causing said computer to select a supplemental software program to be extracted;
means for causing said computer to extract said selected supplemental software program to be extracted; and means for causing said computer to write said extracted supplemental software program.

12. A computer program, comprising:
means for causing a computer to store user environment information associated to user identification information for identifying a user; and
means for causing the computer to store a supplemental software program, which is to be added to an existing software program stored in a software program storing means.

13. A software program providing apparatus, comprising:
a user information storing means for storing user environment information associated to user identification information for identifying a user; and
a supplemental software program storing means for storing a supplemental software program, which is to be added to an existing software program stored in a software program storing means.

14. A user terminal device, comprising:
a software program list extracting means for extracting a list of said software program stored in said software program storing means;
a supplemental software program list extracting means for extracting a list of said supplemental software program stored into said supplemental software program storing means;
a supplemental software program selecting means for selecting said supplemental software program, wherein said supplemental software program is extracted by comparing said list of said software program extracted by said software program list extracting means with said list of said supplemental software program extracted by said supplemental software program list extracting means; a supplemental software program extracting means for extracting said supplemental software program from said supplemental software program storing means, wherein said supplemental software program is selected by said supplemental software program selecting means; and
a supplemental software program writing means for writing said supplemental software program into said software program storing means, wherein said supplemental software program is extracted by said supplemental software program extracting means.

15. A software program developing/providing method for providing a software program including a software program providing means, wherein said software program providing means comprises:
a user information storing means for storing user environment information associated to user identification information for identifying a user; and
a supplemental software program storing means for storing a supplemental software program, which is to be added to an existing software program stored in a software program storing means.

16. A computer readable storage medium having recorded thereon code components that, when loaded on a computer and executed, will cause that computer to operate according to any one of the preceding claims.

17. A computer program having code components that, when loaded on a computer and executed, will cause that computer to operate according to any one of claims 1 to 15.
